# EUROPÄISCHE PATENTSCHRIFT

(11) **EP 1 019 607 B1**
(45) Veröffentlichungstag und Bekanntmachung des Hinweises auf die Patenterteilung: **19.12.2001**
(21) Anmeldenummer: 98952669.4
(22) Anmeldetag: 30.09.1998
(51) Int. Cl.: E06B 3/26, E06B 3/22

(54) **RAHMENPROFILE ZUM HERSTELLEN VON RAHMEN FÜR FENSTER ODER TÜREN UND VERFAHREN ZUM HERSTELLEN VON RAHMENPROFILEN**
FRAME PROFILES FOR PRODUCING WINDOW OR DOOR FRAMES AND A METHOD FOR PRODUCING THE SAME
PROFILES DE CHASSIS POUR PRODUIRE DES DORMANTS DE FENETRE OU DE PORTE ET PROCEDE POUR PRODUIRE DES PROFILES DE CHASSIS

(30) Priorität: 30.09.1997 DE 19743381
(43) Veröffentlichungstag der Anmeldung: 19.07.2000
(73) Patentinhaber: Pazen, Günter, 54492 Zeltingen-Rachtig (DE)
(72) Erfinder: Pazen, Günter, 54492 Zeltingen-Rachtig (DE)
(74) Vertreter: Müller-Gerbes, Margot, Dipl.-Ing.
(86) Internationale Anmeldenummer: EP9806193
(87) Internationale Veröffentlichungsnummer: WO9916996

(56) Entgegenhaltungen:
- WO-A-97/22779
- AT-B- 387 259
- AT-B- 387 260
- DE-A- 2 316 347
- DE-A- 3 319 144
- DE-A- 3 543 767
- DE-U- 9 420 251
- FR-A- 1 279 732
- FR-A- 2 023 656
- GB-A- 2 057 037
- GB-A- 2 156 412
- US-A- 4 516 356

## Beschreibung

Die Erfindung bezieht sich auf Rahmenprofile zum Herstellen von Rahmen für Fenster oder Türen mit L-, Z- oder T-förmigen Querschnitten, mit einem wärmedämmenden Kern aus überwiegend geschlossenzelligem Hartschaumstoff und zumindest bereichsweiser außenseitiger Ummantelung mittels mindestens eines Außenprofiles aus einem thermoplastischem kompakten Kunststoff für die Aufnahme einer Verglasung. Des weiteren befaßt sich die Erfindung mit einem Verfahren zum Herstellen der vorgenannten Rahmenprofile, wobei das Außenprofil aus thermoplastischem Kunststoff extrudiert und kalibriert wird und ein schäumfähiges Gemisch auf Basis eines Polyurethans oder eines thermoplastischen Kunststoffes, wie Polystyrol oder Polypropylen in das Außenprofil eingebracht und unter Ausschäumen des Gemisches ein haftfester Verbund zwischen Außenprofil und Schaumstoff erzeugt wird.

Fenster mit Blendrahmen und Flügelrahmen aus Rahmenprofilen, umfassend einen Kern aus Schaumstoff sowie zumindest bereichsweise eine Ummantelung mit Schalen oder Profilen aus Holz und/oder Kunststoff und/oder Metall sind beispielsweise aus der DE 37 07 275 A1, DE 43 21 702 A1, DE 20 65 935 A1, EP 03 73 371 A1, AT 387 067 B und DE 295 07 482 U1 und WO 97/22 779 bekanntgeworden. Mit derartig aufgebauten Rahmenprofilen können Fenster und Türen geschaffen werden, die im Rahmenbereich eine hohe Wärmedämmung aufweisen und die sofern für die Außenprofile Metalle, wie Aluminium eingesetzt sind, auch eine ausreichende Schalldämmung aufweisen. Hierbei sind mehrteilig aufgebaute Profile gemäß EP 03 73 371 A1 in Bezug auf ihren Isolierkern nicht hinreichend gegenüber äußeren Einflüssen geschützt und Kondensatwasser kann in den Isolierkern einfiltrieren. Auch bei den Profilen gemäß DE 259 07 482 U1 ist eine Kondensatbildung im Bereich der Glasscheibe nicht vermeidbar. In der WO 97/22 779 werden hochwärmeisolierende Profile vorgeschlagen, die aufwendig mittels dreiteiliger Außenschale aus unterschiedlichen Materialien herstellbar sind.

Bei den Verfahren zum Herstellen von Rahmenprofilen bzw. Rahmen für Fenster oder Türen unterscheidet man diskontinuierliche oder kontinuierliche Schäumverfahren. Bei dem diskontinuierlichen Schäumverfahren werden zumeist komplette Rahmen in Formen hergestellt, die nach dem Spritzgußverfahren mit schäumfähigem Gemisch ausgefüllt werden, wie beispielsweise in der DE 295 07 482 U1 oder DE 23 26 425 A1 oder DE 23 26 911 A1 beschrieben.

Kontinuierliche Verfahren zum Ausschäumen eines Kunststoffhohlprofiles mit einem geschlossenen äußeren Mantel aus thermoplastischem Kunststoff, umschließend eine Hohlkammer, die mit Schaumstoff vollständig ausgefüllt wird, werden beispielsweise in der DE 28 44 006 C2, DE 19 59 464 A1, DE 27 52 463 A1, beschrieben. Bei diesen Verfahren ist es erforderlich, die Menge und Qualität des schäumfähigen in die Hohlkammer einzubringenden schäumfähigen Gemisches genauestens zu steuern, um die für die Herstellung von Rahmen für Fenster und Türen notwendigen engen Toleranzen der Abmessungen der Profile sowie die Qualität der Sichtflächen zu erreichen. Auch die genaue Lage von zusätzlichen Verstärkungsprofilen, wie aus der DE 27 52 463 A1 bekannt, innerhalb des Schaumstoffkernes bedarf zusätzlicher Maßnahmen, um eine genaue Lage zu gewährleisten.

Aus der DE-U-9420 251 ist ein Fenster mit mehrkammerigen hohlen Rahmenprofilen bekannt, wobei die wärmedämmende Isolierung aus Schaumstoff zusammen mit einem metallischen Verstärkungsprofil in einer der Gebäudeinnenseite benachbarten Kammer untergebracht sind. Das metallische, die Wärmedämmung zumindest teilweise umklammernde Verstärkungsprofil, bildet unmittelbar eine Wärmebrücke und verschlechtert den Wärmedurchgangskoeffizienten.

Die aus dem Stand der Technik bekannten vielfältigen Rahmenprofile für Fenster in wärmedämmender Ausstattung genügen jedoch den hohen Ansprüchen von hochwärmeisolierenden Wärmedämmfenstern bei denen ein Wärmedurchgangskoeffizient: K-Wert unter 0,8 W/m²K werden soll, nicht oder sie sind nur mit großem Aufwand wie in der WO 97/22 779 beschrieben, erreichbar.

Passivhäuser stellen aufgrund der Möglichkeit, auf ein separates Heizsystem zu verzichten, hohe Anforderungen an die Qualität der verwendeten Bauteile. Sieht man keine gezielte Heizwärmezufuhr unter den Fenstern vor, so daß der Wärmedurchgangskoeffizient der verwendeten Fenster nicht größer als 0,8 W/m²K sein, damit es nicht zu störendem Strahlungswärmeentzug und Kaltluftabfall am Fenster kommt. Daraus ergeben sich bei gegebener Verglasungsqualität Grenzen für den Wärmebrückenverlustkoeffizienten im Bereich des Fensterrahmens.

Der Erfindung liegt die Aufgabe zugrunde, Rahmenprofile für Fenster oder Türen mit hochwärmedämmenden Eigenschaften, hoher Festigkeit und Verwindungssteifigkeit und möglichst einfacher Konstruktion zu schaffen, die zudem wirtschaftlich herstellbar sind und bei denen unerwünschte Wärmebrücken vermieden werden, insbesondere Kurzschlüsse durch Verstärkungsprofile aus Metall.

Diese Aufgabe wird gemäß dem Vorschlag der Erfindung mit einem Rahmenprofil gemäß den Merkmalen des Anspruches 1 und einem Verfahren gemäß den Merkmalen des Anspruches 11 gelöst.

Die Erfindung zeichnet sich durch Rahmenprofile zum Herstellen von Rahmen für Fenster oder Türen mit L-, Z- oder T-förmigem Querschnitt aus, bei denen die Rahmenprofile im Querschnitt betrachtet ein von der äußeren Sichtseite zur inneren Sichtseite mittels Innenstegen in mindestens zwei Kammern unterteiltes Außenprofil aufweisen und eine der Kammern mit dem Hartschaumstoff angefüllt ist und eine nicht mit Hartschaumstoff gefüllte Kammer mit einem Verstärkungsprofil ausrüstbar ist, wobei die mit dem Hartschaumstoff angefüllte Kammer der äußeren Sichtseite des Rahmenprofils benachbart ist und die der Aufnahme des Verstärkungsprofiles dienende Kammer der inneren Sichtseite des Rahmenprofils benachbart ist, so daß die Isothermen ungehindert und wärmebrückenfrei von der Verglasung über die Rahmenprofile in ein an den Rahmen anschließendes Mauerwerk verlaufen. Die erfindungsgemäßen Rahmenprofile zeichnen sich also durch mindestens zwei Kammern aus, von denen eine Kammer mit einem Hartschaumstoff als wärmedämmende Kammer ausgebildet ist, während die andere Kammer hohl verbleibt und hier ein die Festigkeit und Verwindungssteifigkeit der Rahmenprofile erhöhendes Verstärkungsprofil aus Metall oder Kunststoff einschiebbar ist. Neben den bekannten Verstärkungsprofilen aus Metall, wie Stahl können auch Verstärkungsprofile aus hochfestem Kunststoff oder verstärkten Kunststoffen eingesetzt werden. Hierbei können hochfeste thermoplastische Kunststoffe wie beispielsweise auf Polyamidbasis oder Glasfaser- oder kohlefaserverstärkte Kunststoffe eingesetzt werden.

Die Anzahl der Kammern eines Rahmenprofiles richtet sich nach der Größe und Funktion des Rahmenprofiles als Blendrahmen, Flügelrahmenprofil oder Kämpferprofil oder Glasleistenprofil oder Stülpprofil, wie aus der Fenstertechnik bekannt. Bei über den Querschnitt von der Außenseite zur Innenseite des Rahmenprofiles betrachtet mehrkammerigen Profilen, die beispielsweise drei oder vier Kammern aufweisen, wird der wärmedämmende Hartschaumstoffkern in einer der größeren Hohlkammern eingebracht sein, wobei diese nicht unmittelbar an der äußeren Sichtseite angrenzen muß, sondern auch hier gegebenenfalls unter Belassung einer kleineren hohlen Zwischenkammer ausgebildet sein kann.

Auch das Verstärkungsprofil muß nicht an der unmittelbar an der inneren Sichtseite anliegenden hohlen Kammer des Rahmenprofiles eingesetzt sein, sondern kann bei größeren Profilen auch hier der inneren Sichtseite benachbart sein, jedoch ebenfalls unter Zwischenbelassung einer weiteren Hohlkammer. Wesentlicher Erfindungsgedanke ist jedoch, daß das Verstärkungsprofil nicht in die mit Schaumstoff gefüllte Hohlkammer des Rahmenprofiles miteingeschäumt ist, sondern in einer separaten eigenen Hohlkammer nachträglich einschiebbar ist.

Vorteilhafte Ausgestaltungen der erfindungsgemäßen Rahmenprofile sowie des Verfahrens zum Herstellen derselben sind den kennzeichnenden Merkmalen der Unteransprüche entnehmbar.

Mit den erfindungsgemäßen Rahmenprofilen können hochwärmedämmende Fenster und Türen gestaltet werden, die bei Einsatz hochwertiger Verbundisoliergläser mit K-Werten von 0,7 W/m²K oder kleiner eine adäquate Wärmedämmung und Umdämmung des Glases ermöglichen.

Die der Erfindung zugrundeliegende Aufgabe der Optimierung des Isothermenverlaufs bzw. Vermeidung von Wärmebrücken wird mit den erfindungsgemäß ausgestalteten Rahmenprofilen gelöst. Die Anordnung der Verstärkungsprofile der Rahmenprofile, die üblicherweise aus Metall sind, außerhalb der mit Hartschaumstoff gefüllten Bereiche, insbesondere nahe der inneren Sichtseite der Rahmenprofile ermöglicht, daß die Isothermen ungehindert und wärmebrückenfrei von der Verglasung über den von den Rahmenprofilen gebildeten Rahmen in das anschließende Mauerwerk verlaufen können. Dies bedeutet, daß durch den erfindungsgemäß ermöglichten Isothermenverlauf durch das Profil ein Energieabfluß nach außen oder innen ermöglicht ist, wobei Kurzschlüsse durch die Verstärkungsprofile vermieden werden und die Ausbildung von Kondenswasser und Taüwasser an der Verglasung ebenfalls vermieden wird. Erfindungsgemäß gelingt es, den Isothermenverlauf innerhalb der Rahmenkonstruktion zu halten.

Zu dem optimalen Isothermenverlauf trägt auch die weitere Ausgestaltung der Rahmenprofile dergestalt bei, daß der als Anschlagvorsprung an der Verglasung und bevorzugt ebenfalls an der Glaseinstandsseite für die Verglasung vorgesehene Vorsprung der Rahmenprofile mit Hartschaumstoff angefüllt ist und eine mit einem Hartschaumstoffkern ausgerüstete Glasleiste vorgesehen ist, so daß die Verglasung beidseitig von dem mit Hartschaumstoff isolierten Anschlagvorsprüngen und Glasleisten mit über die Verbindungsnähte der Verglasung reichender Einstandshöhe begrenzt ist. Der tiefe Glaseinstand, der beidseitig hoch isoliert ist, wobei ebenfalls die Glasleiste zumindest in dem der Verglasung benachbarten Bereich mit Hartschaumstoff angefüllt ist, verringert erheblich die Fensterrandverluste. Dennoch ermöglichen die erfindungsgemäßen Rahmenprofile die Belüftung des Glaseinstandes und die Tauwasserfreiheit durch Verbindungen zur Außenluft. Ein Tauwasserdurchtritt zur Rauminnenseite hingegen wird durch eine entsprechende Ausgestaltung der Rahmenprofile vermieden.

Erfindungsgemäß wird vorgeschlagen, daß Außenprofil aus kompaktem Kunststoff als geschlossenes Außenprofil auszubilden oder aber als einseitig bereichsweise geöffnetes oder offenes Außenprofil, wobei der Öffnungsbereich der Kammer zugeordnet wird, die mit Schaumstoff anzufüllen ist und nach dem Befüllen mit Schaumstoff mit Hilfe eines Deckelprofilbandes wieder geschlossen wird. Hierbei kann die Öffnung des Außenprofiles mittels eines Deckelprofilbandes verschlossen werden, das durch Herstellen eines geschlossenen Außenprofiles durch Extrusion anschließend aus diesem ausgetrennt und nachträglich wieder eingesetzt wird oder mit Hilfe eines separat extrudierten Deckelprofilbandes eine Öffnung eines Außenprofiles nachträglich verschlossen wird.

Für eine Steigerung der Funktionstüchtigkeit der Rahmenprofile bezüglich ihrer Hinterlüftung und Wasserabführung wird vorgeschlagen, Wasserabführungsbohrungen und/oder Hinterlüftungsbohrungen, die durch die mit Schaumstoff gefüllte Kammer der Rahmenprofile führen mittels eines Kunststoffröhrchens auszukleiden, um Pilz- und Sporenbildungen im Schaumbereich zu vermeiden.

Für das Verfahren zum Herstellen der erfindungsgemäßen Rahmenprofile können sowohl geschlossene Außenprofile aus thermoplastischem Kunststoff als auch zumindest in einem Bereich einer Kammer offene Außenprofile aus thermoplastischem Kunststoff extrudiert werden, wobei die offenen Außenprofile mittels eines separat extrudierten Deckelprofilbandes nachträglich wieder geschlossen werden. Geschlossene Außenprofile hingegen können anschließend aufgetrennt und dann ausgeschäumt und dann wieder verschlossen werden. Für die Durchführung des Extrusionsvorganges mit Ausschäumen während oder nach der Extrusion bzw. nach dem Kalibrieren ist wesentlich, daß die Rahmenprofile stets an ihren äußeren und inneren Sichtseiten geführt werden, um die erforderlichen Toleranzen einzuhalten und die gewünschte hohe Qualität der Sichtseiten bezüglich Glätte und Maßhaltigkeit zu erreichen.

Um einen übermäßigen Druckaufbau beim Ausschäumen der Hohlkammer des Außenprofiles zu vermeiden, wird vorgeschlagen, daß Entlüftungslöcher an einer geeigneten Stelle der entsprechenden mit Schaum angefüllten Kammer des Außenprofiles vorgesehen werden.

Es ist auch möglich, in eine Hohlkammer des Außenprofiles nachträglich einen vorgeschäumten Kern aus Hartschaumstoff einzubringen. Es ist auch möglich, einen solchen vorgefertigten Kern mit einem expansionsfähigen Mittel beschichtet ist, das eine Verbindung mit dem Außenprofil bewirkt. Beispielsweise kann ein schäumfähiger expandierender Kleber auf Basis Polyurethan auf den Hartschaumstoffkern aufgebracht sein, der nach dem Einbringen desselben in die Hohlkammer des Außenprofiles in die Hohlkammer des Rahmenprofiles aufschäumt und einen haftfesten Verbund mit dem Außenprofil erzeugt.

Das erfindungsgemäße Verfahren zum Extrudieren eines geschlossenen Außenprofils, mit mindestens zwei Kammern, wobei nur eine Kammer während des Extrudierens mit schäumfähigem Gemisch gefüllt wird, erleichtert das Einhalten von Formen und Toleranzen. Bei dem Einbringen des schäumfähigen Gemisches erst nach dem Kalibrieren und Erstarren des extrudierten Außenprofiles erhält man eine sehr genaue Außenform mit hoher Oberflächengüte, wobei jedoch zum Einbringen des schäumfähigen Gemisches das Außenprofil mindestens längs einer Stelle aufgetrennt werden muß. Da durch die Kalibrierung, die in der Regel mit durch die Hohlkammern geführtem Wasser in bekannter Weise erfolgt, die Innenwandungen der Hohlkammer, in welche das schäumfähige Gemisch eingebracht werden soll, feucht sind, wird erfindungsgemäß vorgeschlagen, nach dem Öffnen der Hohlkammer diese zu trocknen, beispielsweise durch Einbringen von Warmluft - fönen.

Selbstverständlich ist es auch möglich, daß Außenprofil aus kompaktem Kunststoff durch Coextrusion mehrschichtig auszubilden, beispielsweise mit einer zusätzlichen außenseitigen witterungsbeständigen Schicht aus einem thermoplastischen Kunststoff, beispielsweise auf Basis von Acrylharzen.

Weitere Ausgestaltungen der Erfindung werden nachfolgend anhand in der Zeichnung dargestellter Ausführungsbeispiele erläutert. Es zeigen:
- Figur 1: den Querschnitt durch ein Rahmenprofil mit Z-förmigem Querschnitt als Flügelrahmenprofil,
- Figur 2: den Querschnitt durch ein Rahmenprofil mit L-förmigem Querschnitt als Blendrahmenprofil,
- Figur 3: den Querschnitt durch ein Rahmenprofil mit T-förmigem Querschnitt als Kämpferprofil,
- Figur 4: den Querschnitt durch einen Fensterrahmen gebildet aus den Rahmenprofilen gemäß Figur 1 und 2,
- Figur 5: den Querschnitt eines offenen Außenprofils mit Z-förmigem Querschnitt für ein Flügelrahmenprofil,
- Figur 6: den Querschnitt eines offenen Außenprofils mit L-förmigem Querschnitt für ein Blendrahmenprofil,
- Figur 7: ein Deckelprofilband als Hilfsprofil für die Außenprofile nach Figur 5 und 6,
- Figur 8a: den Querschnitt durch das Rahmenprofil gebildet aus den Profilen gemäß Figur 5 und 6,
- Figur 8b: den Querschnitt durch das Rahmenprofil gebildet aus den Profilen gemäß Figur 6 und 7,
- Figur 9: den Querschnitt durch ein geschlossenes Außenprofil mit abtrennbarem Deckelprofilband mit Z-förmigem Querschnitt als Flügelrahmenprofil,
- Figur 10: den Querschnitt durch ein Außenprofil mit abtrennbarem Deckelprofilband mit L-förmigem Querschnitt für ein Blendrahmenprofil,
- Figur 11: das Rahmenprofil im Querschnitt mit dem Außenprofil gemäß Figur 10,
- Figur 12: den Querschnitt durch einen Fensterrahmen mit den Rahmenprofilen auf der Basis der Profile gemäß Figur 9 bis 11,
- Figur 13: den Querschnitt durch ein Rahmenprofil mit T-förmigem Querschnitt als Kämpferprofil mit einem Außenprofil mit Deckelprofilband,
- Figur 14: einen horizontalen Querschnitt durch einen Fensterrahmen mit Stülpprofil und Flügelrahmenprofilen auf der Basis des in der Figur 12 dargestellten Flügelrahmenprofiles,
- Figur 15: schematische Darstellung des Herstellungsprozesses eines Rahmenprofiles gemäß Figur 1 und 2 und eines Stülpprofiles gemäß Figur 14,
- Figur 16: schematische Darstellung des Herstellungsverfahrens eines Rahmenprofiles gemäß Figur 8a, 8b, Figur 9 und Figur 10 und Figur 11 und Figur 13,
- Figur 17: schematische Darstellung des Verfahrens gemäß Figur 16 mit Querschnitten der einzelnen Verfahrensabschnitte,
- Figur 18: schematische Darstellung der Isothermenverläufe anhand des Fensterrahmens von Figur 4.

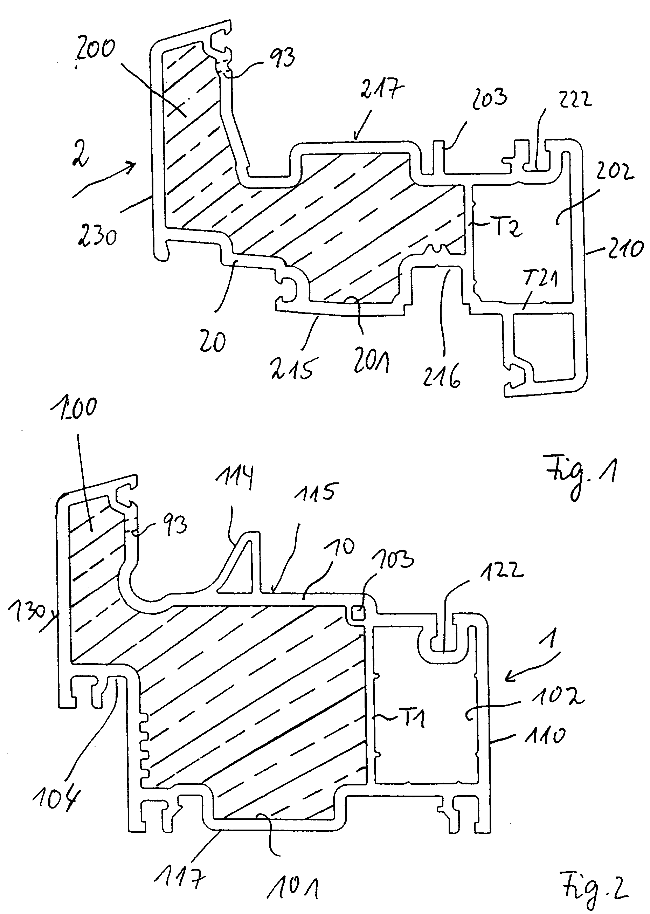

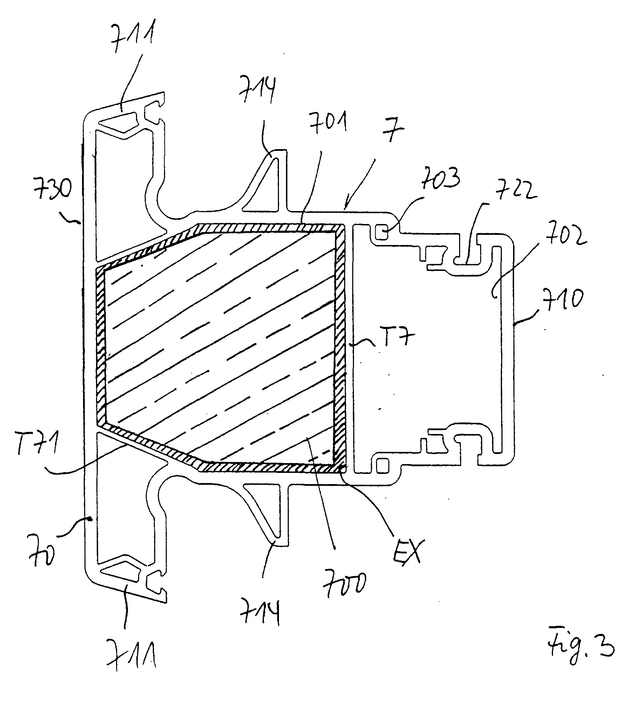

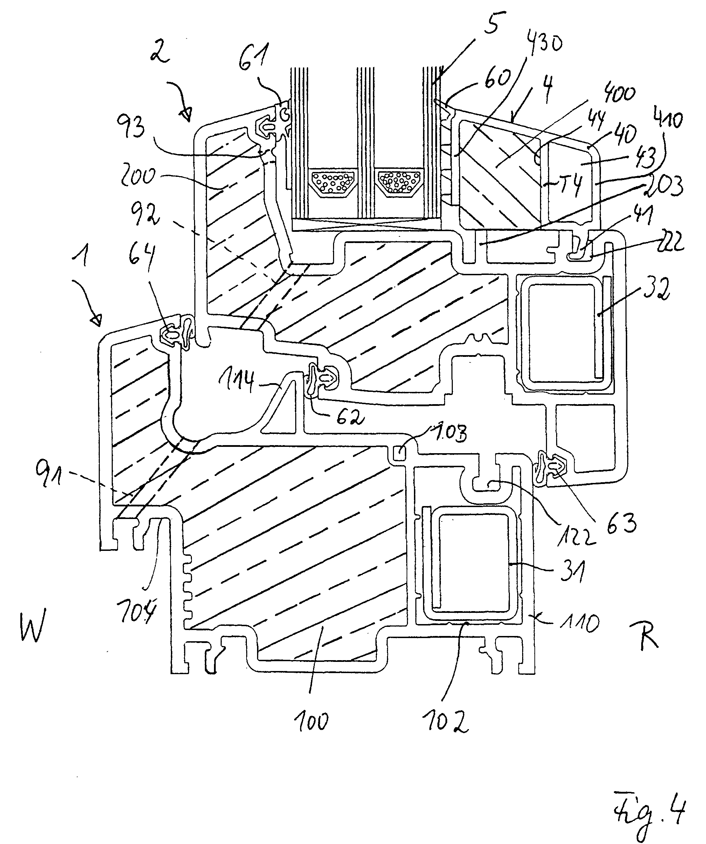

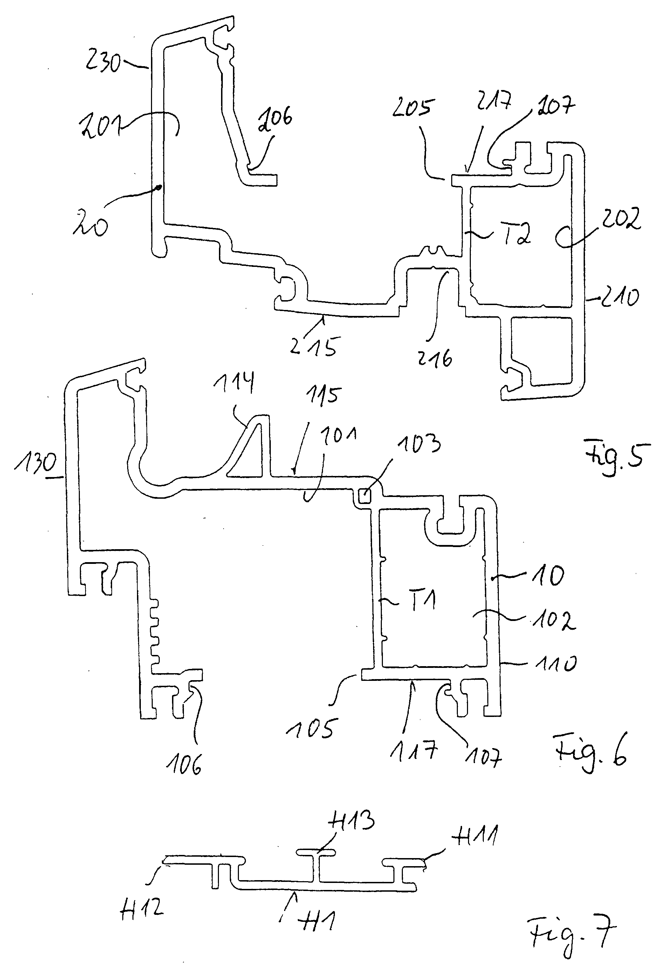

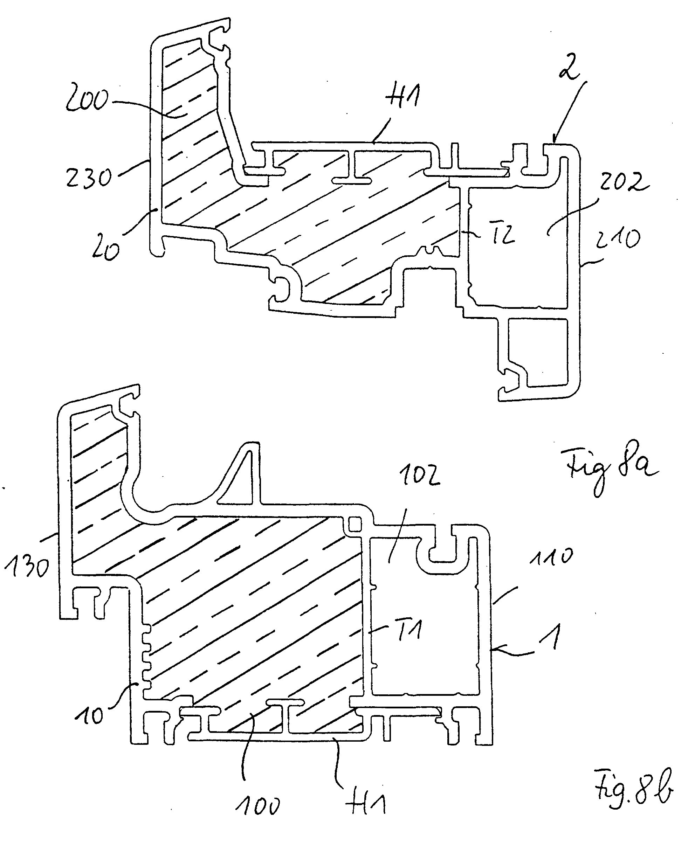

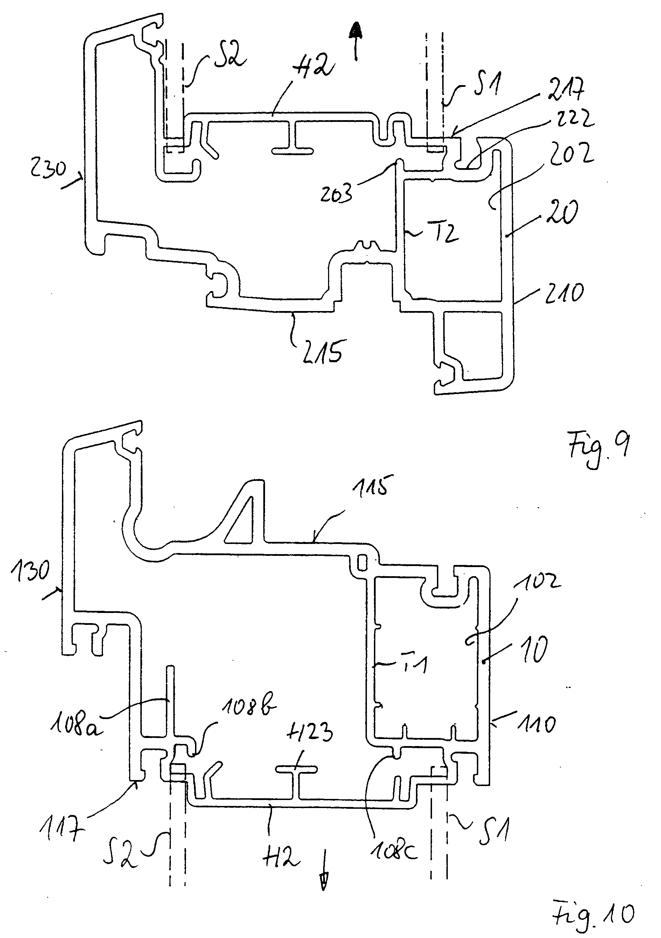

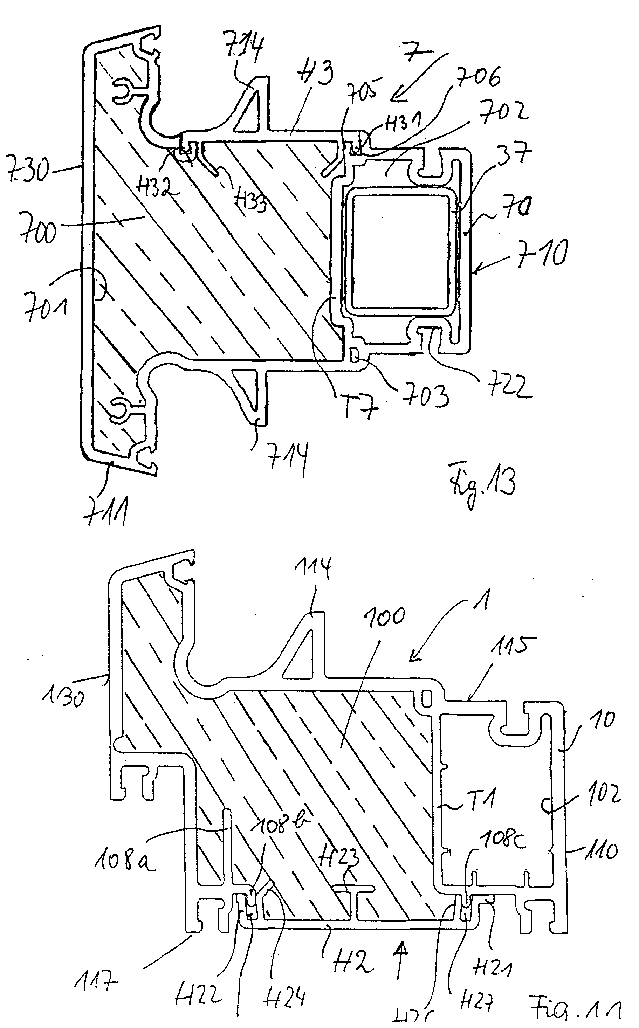

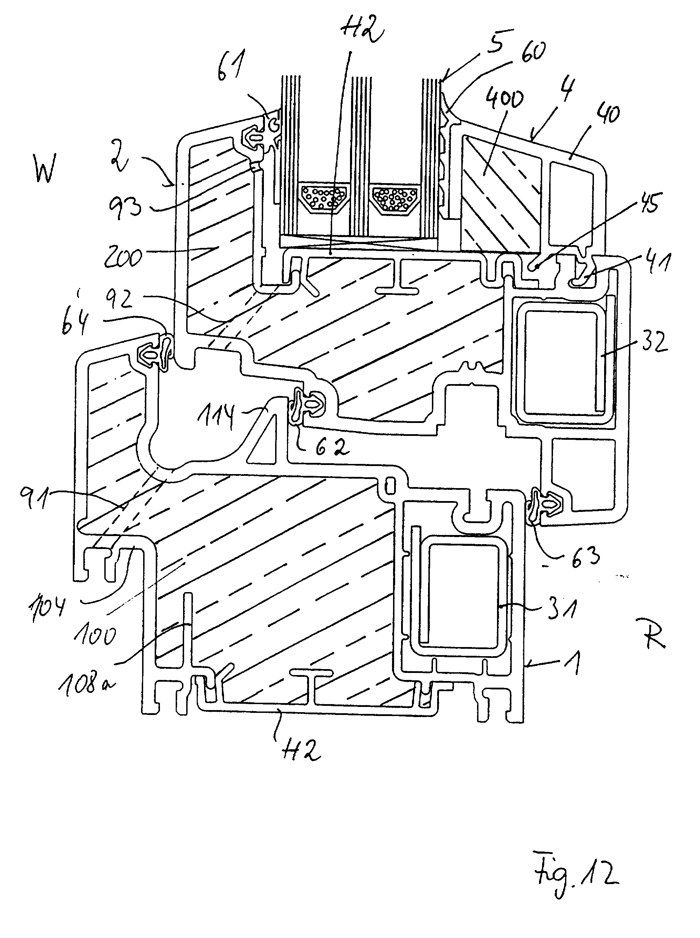

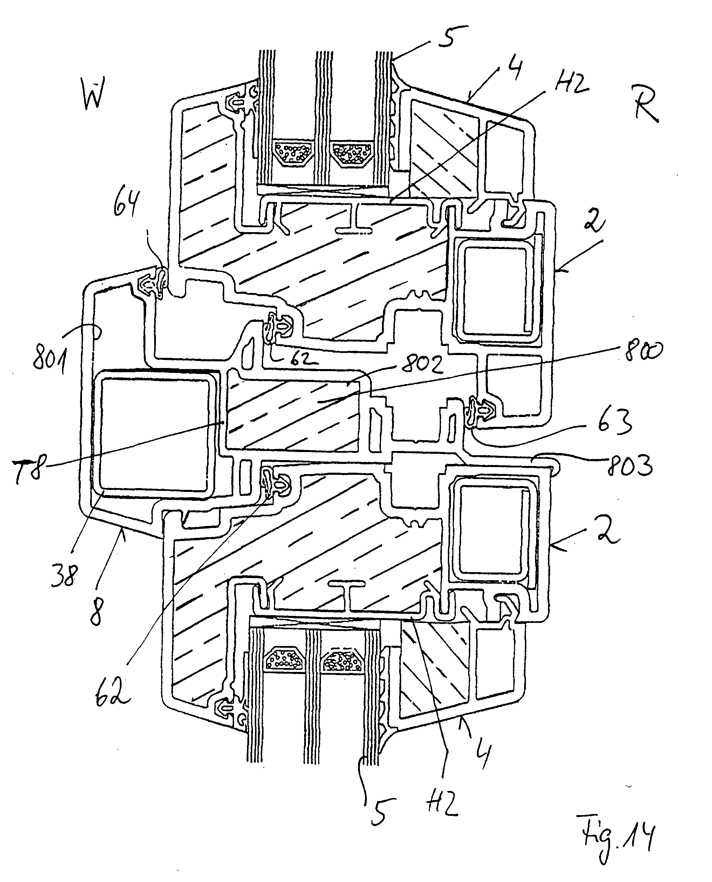

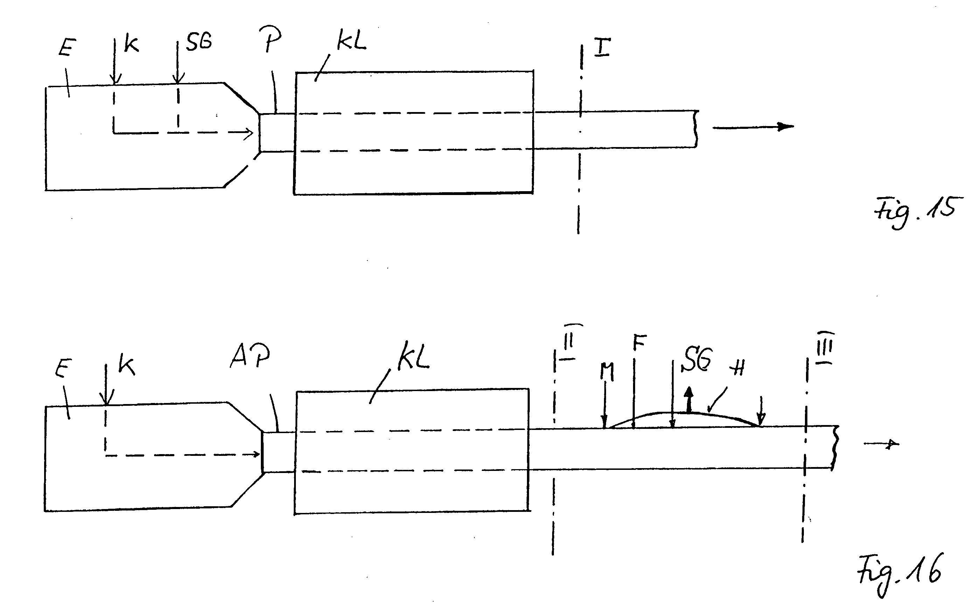

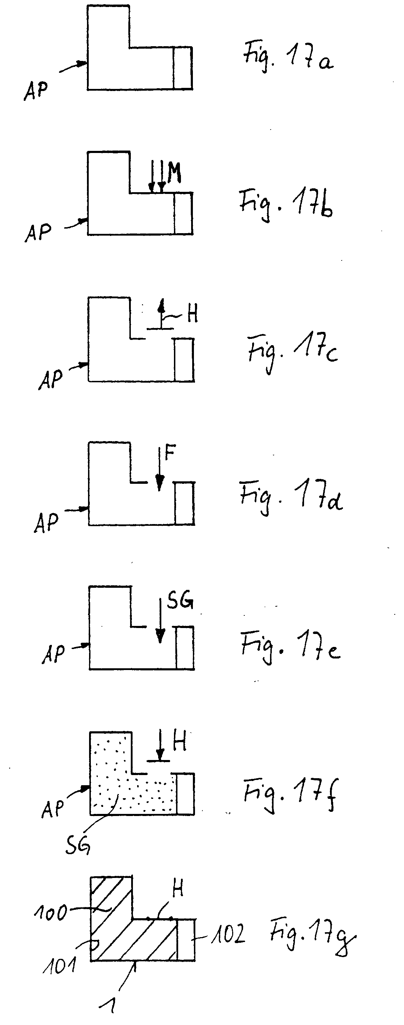

In den Figuren 1 und 2 sind zwei Rahmenprofile dargestellt, die gemäß Figur 1 mit Z-Querschnitt als Rahmenprofil 2 zum Herstellen von Flügelrahmen und gemäß Figur 2 als Rahmenprofil 1 mit L-Querschnitt zum Herstellen von Blendrahmen für Fenster und Türen verwendet werden. Das FlügelRahmenprofil 2 besitzt ein geschlossenes Außenprofil 20, das im Querschnitt betrachtet durch einen Innensteg T2 in zwei Hauptkammern 201, 202 unterteilt ist. Die der äußeren und Bewitterung zugewandten Sichtseite 230 benachbarte Kammer 201 ist mit einem wärmedämmenden Hartschaumstoff 200 angefüllt, während die der inneren Sichtseite 210 benachbarte Kammer 202 der Aufnahme eines Verstärkungsprofiles dient. Das Außenprofil 20 ist aus einem witterungsbeständigen Material auf Basis von thermoplastischem extrudierbaren Kunststoff hergestellt, beispielsweise aus Hart-PVC oder Polypropylen oder geeignete andere Thermoplaste, wie z. B. modifizierte Acrylharze. Es kann zumindest bereichsweise an der Witterungsseite zweischichtig mit einer zweiten Kunststoffschicht oder Kunststoffolie, beispielsweise auf Acrylatbasis versehen sein. Für den HartSchaumstoffkern wird beispielsweise Polyurethan oder Polystyrol vorgesehen, wobei Hartschaumstoffe mit einer Druckfestigkeit nach DIN 53 421 von mindestens 0,40 N/mm² oder mehr und einer Wasseraufnahme in 7 Tagen Wasserlagerung nach DIN 53 428 < 2 Volumenprozent bevorzugt sind. Das Außenprofil 20 des Flügelrahmenprofiles ist entsprechend den unterschiedlichen Funktion gegliedert ausgebildet und weist auf seiner Falzseite 215 eine eingeformte Beschlagnut 216 auf, sowie auf der Glaseinstandsseite 217 eine Einstecknut 222 für eine Glasleiste sowie einen weiteren Dichtungssteg 203.

Die Anschlagvorsprünge sind auf der Wetterseite in die Hauptkammer 201 integriert, jedoch ist es auch möglich, hier noch eine weitere Kammer durch einen Innensteg abzuteilen.

Der innere Anschlagvorsprung des Rahmenprofiles 2 hingegen ist von der die Verstärkung aufnehmenden Kammer 202 durch einen weiteren Innensteg T21 abgeteilt, wodurch eine höhere Steifigkeit erreicht wird.

Bevorzugt wird das Rahmenprofil 2 gemäß Figur 1 kontinuierlich in der Weise gefertigt, daß während des Extrusionsvorganges des Außenprofiles 20 ein schäumfähiges Gemisch in die Kammer 201 eingebracht wird und das Außenprofil zusammen mit dem schäumfähigen Gemisch ein Kalibrierwerkzeug durchläuft, wobei es unter Aushärtung verfestigt.

Das Blendrahmenprofil 1 gemäß Figur 2 weist einen ebenfalls ein außenseitig geschlossen umlaufendes Außenprofil 10 auf, und ist durch einen zu den äußeren und inneren Sichtseiten 130, 110 parallel verlaufenden Innensteg T1 in zwei Hauptkammern 101 und 102 unterteilt. Auch hier ist die äußere Hauptkammer 101, die der Bewitterungsseite benachbart ist, mit einem Hartschaumstoff 100 angefüllt, wie bei dem Rahmenprofil 2 für den Flügelrahmen gemäß Figur 1 erläutert. Das Außenprofil 1, das ebenso wie das Rahmenprofil 2 aus einem thermoplastischen Kunststoff, wie Hart-PVC oder Polypropylen extrudiert ist, ist entsprechend den Funktionen des Blendrahmens gestaltet und weist auf seiner Falzseite 115 einen Vorsprung 114 für eine Mitteldichtung auf, sowie eine Einstecknut 122 gegenüber dem äußeren Anschlagvorsprung. Auf der dem Mauerwerk zugewandten Befestigungsseite 117 sind Vorsprünge und Nuten in bekannter Weise ausgebildet sowie zusätzlich im Bereich der äußeren Sichtseite 130 ein nach innen abgesetzter Absatz 104 mit Aufnahmenut beispielsweise für einen Fensterbankanschluß.

In der Figur 4 ist der Querschnitt durch die unteren Holme eines Fensterrahmens hergestellt aus Profilen gemäß Figur 1 und 2 dargestellt, wobei in die der inneren Sichtseite benachbarten Kammern 102 des Rahmenprofiles 1 und 202 des Rahmenprofiles 2 Verstärkungsprofile 31, 32 beispielsweise aus Metall eingesetzt sind. Die Raumseite ist mit R und der Bewitterung ausgesetzte Außenseite mit W angedeutet. Blendrahmen und Flügelrahmen sind mittels der Dichtungen 64, 62 und 63 gegeneinander abgedichtet. In das Flügelrahmenprofil 2 ist die Verglasung 5 eingesetzt und wird mittels der Glasleiste 4, die in die Nut 222 mit einem Rastfuß 41 einrastet, gehaltert. An dem äußeren Anschlag wird die Verglasung mittels der Abdichtung 61 abgedichtet. Die Hinterlüftung und Wasserableitung erfolgt durch mittels Röhrchen ausgekleideter Wasserführungsbohrungen 92 im Flügelrahmenprofil 2 und Wasserführungsbohrungen 91 im Blendrahmenprofil 1 zur Außenseite hin. Auf diese Weise ist auch eine Hinterlüftung der Glasfalz ermöglicht. Um zu verhindern, daß Wasser aus dem Glasfalzbereich zur Rauminnenseite durchläuft, ist der Steg 203 zwischen der Einstecknut 222 und der Verglasung am Flügelrahmen ausgebildet, auf dem die Glasleiste 4 aufsitzt. Auch die Konstruktion und der wärmegedämmte Aufbau der Glasleiste 4 trägt zur Optimierung des Isothermenverlaufs und der Wärmedämmung bei. Die Glasleiste weist beispielsweise zwei Kammern auf, die durch den Steg T4 unterteilt sind. In der der Verglasung 5 benachbarten äußeren Sichtseite 430 und Kammer ist der Hartschaumstoffkern untergebracht. Die innere Sichtseite ist mit 410 bezeichnet. Der wärmegedämmte Anschlagvorsprung des Rahmenprofils 2 und die mit einem wärmedämmenden Schaumstoffkern 400 unterfütterte Glasleiste 4 ermöglichen einen hohen wärmegedämmten Einstand der Verglasung 5 am Flügelrahmen, wodurch sehr geringe Wärmedurchgangskoeffizienten bis unter 0,7 W/m²K erreichbar sind. Hierbei wird die Verbindungsnaht 51 der Verglasung beidseitig hoch überragt. Auch an der Auflageseite der Verglasung am Rahmenprofil 2, dem sogenannten Glaseinstand, ist das Rahmenprofil isoliert ausgebildet mittels des Hartschaumstoffes. Die Glasleiste 4 weist ebenfalls ein Außenprofil 40 aus thermoplastischen Kunststoff auf, beispielsweise Hart-PVC und wird durch Extrusion hergestellt. Je nach Größe der Glasleiste kann diese durch einen Zwischensteg T4 unterteilt sein in zwei Kammern, von denen eine geschlossen ist und als Hohlkammer 43 der Rauminnenseite zugewandt ist und die zweite Kammer, die beispielsweise teilweise offen ist, mittels eines eingesetzten Schaumstoffkernes 400 beispielsweise aus Polyurethanhartschaum wärmedämmend ausstaffiert ist. An der der Verglasung anliegenden Seite kann des weiteren eine Dichtung 60 vorgesehen sein, die gegebenenfalls mit der Glasleiste 4 fest verbunden ist.

Um ein gutes Anfüllen der jeweiligen Kammer mit dem aufschäumenden Schaumstoff zu ermöglichen, ist vorgesehen, daß in einem oberen Bereich, wie beispielsweise an den Anschlagvorsprüngen der Profile 1 und 2, siehe Figur 2 und 1 Entlüftungslöcher 93 vorgesehen sind, die ein Entweichen von Luft zum guten Ausschäumen der Kammern 101, 201 ermöglichen.

Des weiteren wird am Blendrahmenprofil 1 an der Falzseite 115 beispielsweise eine kleine Hohlkammer 103 vorgesehen, die beispielsweise bei Einsetzen von Festverglasungen in den Blendrahmen aufgebohrt werden kann, um hier einen Anschlagsteg entsprechend dem Steg 203 des Flügelrahmenprofiles 2 einzusetzen. Zusätzlich würde für diesen Fall der Festverglasung am Blendrahmen der Vorsprung 114 für die Mitteldichtung 62 entfernt, so daß eine Auflagefläche für die Verglasung geschaffen ist. So ist es möglich, mit nur wenigen Profilen und damit nur wenigen Werkzeugen Fenster und Türen unterschiedlichen Aufbaues herzustellen.

In der Figur 15 ist schematisch das Verfahren zum Herstellen von Rahmenprofilen gemäß Figur 1 und 2 dargestellt. Kunststoff K und schäumfähiges Gemisch SG werden einem Extruder E zugeführt und über ein Werkzeug extrudiert zu dem Profil P, das nachfolgend ein Kalibrierwerkzeug zum Abkühlen und Tolerieren durchläuft. Am Ende wird das fertige Rahmenprofil abgelängt. Der Querschnitt I kann beispielsweise einem Profil entsprechen wie in der Figur 1 oder 2 dargestellt.

In den Figuren 5 und 6 sind Querschnitte von Außenprofilen 20 bzw. 10 für einen Flügelrahmen bzw. Blendrahmen dargestellt, die erst nach der Extrusion und Kalibrierung mit einem schäumfähigen Gemisch zum Ausschäumen einer Kammer befüllt werden. Hierbei sind die Außenprofile 10 bzw. 20, die im Prinzip funktional analog zu den in Figur 1 und 2 beschriebenen Rahmenprofilen für Blendrahmen und Flügelrahmen aufgebaut sind, in den mit Schaumstoff anzufüllenden Kammerbereich 201, 101 mit einer Öffnung 205, 105 versehen, wobei diese Öffnung beim späteren Flügelrahmenprofil im Bereich des Glaseinstandes oder der sogenannten Glasfalz 217 ausgebildet ist und beim späteren Blendrahmenprofil im Bereich der Befestigungsseite 117 an einem Mauerwerk. Diese teilweise geöffneten Außenprofile 20 bzw. 10 werden nach dem Extrusions- und Kalibriervorgang mit einem schäumfähigen Gemisch angefüllt und dann wird die jeweilige Öffnung 105, 205 mittels eines Deckprofilbandes H1 verschlossen, siehe Figur 8a für das Flügelrahmenprofil 2 und Figur 8b für das Blendrahmenprofil 1. Das Deckbandprofil H1, siehe Figur 7 wird in an den Außenprofilen 10 bzw. 20 im Bereich der Öffnung seitlich ausgebildeten einander gegenüberliegenden Einstecknuten 106, 107 bzw. 206, 207 eingeklipst. Des weiteren weist das Deckprofilband H1 neben den Einklipsstegen H11, H12 noch Vorsprünge H13 sowie weitere nicht näher bezeichnete Vorsprünge auf, die der mit Schaum zu füllenden Kammer zugewandt sind und die in dem aufschäumenden Schaum mit eingeschäumt werden, um so einen haftfesten Verbund zu bilden. Nach dem Auffüllen der offenen Hauptkammer 201 bzw. 101 der Außenprofile 20 bzw. 10 und Verschließen derselben mittels des Deckprofilbandes H1 werden die gewünschten Rahmenprofile mit hoher Wärmedämmung erhalten. Auch die Außenprofile 10, 20 gemäß Figur 5 und 6 weisen eine geschlossene kleinere durch den Innensteg T1 bzw. T2 abgeteilte Hohlkammer 102 bzw. 202 auf, in welche nachträglich ein Verstärkungsprofil eingeschoben werden kann.

Eine weitere Möglichkeit der Herstellung wärmegedämmter Rahmenprofile wird an den Profilen gemäß Figur 9 und 10 erläutert. Hierbei werden wiederum Außenprofile 10 für ein Blendrahmenprofil gemäß Figur 10 und 20 für ein Flügelrahmenprofil aus einem thermoplastischen Kunststoff extrudiert und kalibriert. Hierbei sind die Außenprofile geschlossen. Das schäumfähige Gemisch wird jedoch nicht unmittelbar während oder nach dem Extrusionsvorgang eingefüllt, sondern erst in das kalibrierte und erstarrte Außenprofil, wobei dieses zum Zwecke des Einfüllens des schäumfähigen Gemisches nachträglich geöffnet wird. Hierzu sind erfindungsgemäß die Außenprofile 10 bzw. 20 gemäß Figur 10 und 9 mit einem abtrennbaren Steg, der dann zum anschließenden Wiederschließen der erzeugten Öffnung als Deckelprofilband H2 verwendet wird, ausgebildet. Dieses von dem extrudierten Außenprofil im Bereich der mit Schaum zu füllenden Kammer abtrennbare Deckelprofilband H2 ist beim späteren Flügelrahmenprofil auf der Glasfalzseite 217 und bei dem späteren Blendrahmenprofil an der Befestigungsseite 117 ausgebildet. Nach dem Extrusion und Kalibrierung des Außenprofiles 10 bzw. 20 gemäß Figur 10 und 9 wird dieses Deckelprofilband H2 im Bereich der schematisch angedeuteten Schnitte S1, S2 jeweils abgetrennt. In die so entstandene Öffnung wird danach das schäumfähige Gemisch eingebracht und danach das Deckelprofilband H2 wieder eingeklipst, um die Öffnung zu verschließen. In der Figur 11 und 12 sind die so hergestellten Rahmenprofile 1 bzw. 2 dargestellt. Die gemäß Figur 9 und 10 vorextrudierten Außenprofile 20, 10 weisen ebenfalls eine durch Innenstege T2 bzw. T1 abgeteilte der inneren Sichtseite 210 bzw. 110 benachbarte Hohlkammer 202 bzw. 102 für die Aufnahme von Verstärkungsprofilen auf.

Das abgetrennte Deckelprofilband H2 wird nach dem Einfüllen des schäumfähigen Gemisches in die offene Kammer 101 bzw. 201 wieder auf das Profil aufgeklipst, wozu dieses in Abänderung gegenüber den Außenprofilen gemäß Figur 1 und 2 jeweils entsprechende Raststege 108c, 108b am Außenprofil 10 bzw. entsprechende Stege am Außenprofil 20 des Flügelrahmens aufweisen. Das Deckelprofilband H2 weist auf seiner der zu verschließenden Kammer des jeweiligen Außenprofiles zugewandten Seite Einstecknuten H25, H27 auf, die von den Stegpaaren H22, H24 bzw. H26, H21 gebildet sind. Ebenfalls weist das Deckelprofilband zusätzlich nach innen gerichtete Verankerungsstege H23 auf, so daß nach dem Verschließen des Außenprofiles durch das aufschäumende Gemisch ein Einschäumen des Deckelprofilbandes erfolgt und damit ein haftfester Verbund und Verschluß hergestellt ist. Erfindungsgemäß ist das Deckelprofilband H2 dergestalt am Außenprofil angeformt, siehe Figur 9, 10, daß durch das Abtrennen desselben vom Außenprofil sowohl die Rastnuten am Außenprofil freigelegt werden als auch das Deckelprofilband. Für die Fertigung der Fensterrahmen werden dann, wie aus der Figur 12 ersichtlich, in die der Sichtseite benachbarte Kammer jeweils Verstärkungsprofile 31, 32 eingeführt, wie bereits bei Figur 4 erläutert, um zusammen mit der Verglasung 5, der Verglasungsleiste 4 sowie den Dichtungen ein funktionsfähiges Fenster zu schaffen.

Die Verglasungsleiste 4 gemäß Figur 12 weist zudem an ihrer dem Flügelrahmenprofil 2 zugewandten Seite einen nach innen gerichteten vorstehenden Steg 45 auf, der als Sicherung gegen Aushebeln dient.

Zusätzlich ist an dem Rahmenprofil 1 für den Blendrahmen gemäß Figur 12 und Figur 10 das Außenprofil mit einem parallel zur äußeren Sichtseite verlaufenden in die auszuschäumende Kammer 101 gerichteten Steg 108a ausgebildet, der bei einer Verschraubung als zusätzlicher Stützsteg dient.

Zusätzlich zu den Profilen mit L- und Z-Querschnitt können auch Profile mit T-Querschnitt, siehe Figur 13 sowohl mit einem geschlossenen Außenprofil 70 als auch mit einem öffenbaren Außenprofil als Kämpferprofil 7 hergestellt werden. Bei dem Ausführungsbeispiel nach Figur 13 ist das Rahmenprofil 7 mit T-förmigem Querschnitt in analoger Weise wie bei den Profilen gemäß Figur 9, 10 und 11 hergestellt. Das Außenprofil 70 ist durch mindestens einen Innensteg T7 wiederum in mindestens zwei Hohlkammern 701 bzw. 702 unterteilt, wobei daß der äußeren Sichtseite 730 die benachbarte Kammer mit Schaumstoff 700 wärmedämmend ausgerüstet ist und die andere der inneren Sichtseite 710 benachbarte Kammer mit einem Verstärkungsprofil 37 ausgerüstet ist. Auch das T-förmige Profil weist Anschlagstege 714 für eine Mitteldichtung auf, sowie Einstecknuten 722 für Glashalteleisten in bekannter Weise. Das Rahmenprofil 7 ist an einer Falzseite mit einer Öffnung 705 versehen, die nachträglich nach dem Einbringen des schäumfähigen Gemisches für den Schaumstoffkern 700 mittels des Deckbandprofiles H3 durch Aufrasten und Einschäumen der Vorsprünge H33 dicht verschließbar ist. Hierbei wird die kleine Kammer 703 geöffnet, so daß hier das Deckbandprofil H3 mit seinem Steg H31 einrasten kann. Ebenfalls ist auf der gegenüberliegenden Seite eine Einstecknut für den Rastfuß H 32 ausgebildet. Der Anschlagvorsprung 714 für die Mitteldichtung ist ebenfalls am Deckprofilband H3 ausgebildet.

In der Figur 14 ist wahlweise der Einsatz der Flügelrahmenprofile 2, wie an den Figuren und 8a und 12 erläutert, in Verbindung mit einem Stulpprofil 8 für eine Fensterunterteilung dargestellt. Aus Gründen einer ausreichenden Verstärkung des Stulpprofiles 8 ist dieses ebenfalls in zwei Hauptkammern durch einen Innensteg T8 unterteilt, wobei jedoch die größere der äußeren Sichtseite zugewandte Hauptkammer 801 der Aufnahme eines Verstärkungsprofiles 38 dient und die kleinere Kammer 802 wärmedämmend mit einem eingeschäumten Schaumstoffkern 800 ausgerüstet ist. Zur Rauminnenseite hin weist das Stulpprofil 8 einen Anlagesteg 803 für die Anlage an dem einen Rahmenprofil 2 auf, wobei dieses Rahmenprofil 2 eines Flügelrahmens in diesem Bereich um den Anschlagvorsprung verkürzt ist.

In den Figuren 16 und 17 ist schematisch das Herstellen von wärmegedämmten Rahmenprofilen beispielsweise gemäß Figur 9, 10 dargestellt, bei dem in einem ersten Schritt ein Außenprofil aus thermoplastischen Kunststoff mittels eines Extruders extrudiert und das Außenprofil AP dem Kalibrierwerkzeug zugeführt wird und nach Verlassen des Kalibrierwerkzeuges als geschlossenes Außenprofil, siehe Querschnitt II, beispielsweise Figur 9 und 10 sowie Figur 17a anschließend aufgetrennt
- siehe Figur 17b - wird, wobei M die Messer darstellen, die die Schnitte durchführen, das ausgeschnittene Deckelbandprofil H abgehoben wird
- siehe Figur 17c - danach die geöffnete Kammer des Außenprofiles mittels eines Fönes F gefönt - siehe Figur 17d - und getrocknet wird und danach das schäumfähige Gemisch SG in die so getrocknete und geöffnete Hohlkammer eingeführt wird - siehe Figur 17e - und anschließend das Deckelbandprofil wieder auf das Außenprofil aufgerastet wird, siehe Figur 17f, so daß am Ende gemäß Querschnitt III das Profil wie in Figur 17g und in der Figur 11 dargestellt, gefertigt ist.

Anstelle eines geschlossenen Außenprofiles kann bei dem Verfahren nach Figur 16 auch ein teilweise geöffnetes Profil unmittelbar extrudiert werden, wie es in der Figur 5 und 6 dargestellt ist, zusätzlich ein Deckelprofilband separat extrudiert werden, wobei dann nach dem Kalibrieren des Außenprofiles direkt das Trocknen der geöffneten Kammer mittels Fön erfolgen kann, danach das Einfüllen des schäumfähigen Gemisches und danach wiederum das Aufrasten und Verschließen der geöffneten Kammer des Deckelprofilbandes. Es entsteht dann im Querschnittbereich III ein Profil wie in den Figuren 8a und 8b beispielhaft dargestellt.

Des weiteren ist es auch möglich, das Verfahren nach Figur 16 so durchzuführen, daß das extrudierte geschlossene Außenprofil AT nur längs einer Schnittstelle S1 aufgeschnitten und aufgeklappt wird, danach gefönt wird, das schäumfähige Gemisch eingefönt wird und dann das aufgeklappte Deckelprofilband wieder längs der aufgeschnitten Naht eingerastet wird.

Wesentlich für die Durchführung des Verfahrens gemäß Figur 16 ist die Führung des Außenprofiles an beiden Sichtseiten, wobei die Öffnung des Außenprofiles auf der Oberseite zu liegen kommt und damit ein einfaches Einfüllen und Wiederschließen und gleichzeitig maßgenaues Herstellen des wärmegedämmten Rahmenprofiles möglich ist.

Die vorangehend gemäß den Figuren 15 und 16 beschriebenen Verfahren können kontinuierlich durchgeführt werden.

Es ist aber auch möglich, das Verfahren gemäß Figur 16 diskontinuierlich durchzuführen, d. h. beispielsweise den Einschäumvorgang später vorzunehmen, beispielsweise an abgelängten Profilabschnitten. Das einseitige Anheben des nur längs einer Naht aufgeschnittenen Außenprofiles kann beispielsweise mittels Rollen erfolgen.

Eine weitere Möglichkeit des Herstellens eines Rahmenprofiles mit einem wärmedämmenden Schaumstoffkern, bei dem das Rahmenprofil, d. h. das kompakte Außenprofil durch mindestens einen Innensteg in mindestens zwei Kammern unterteilt ist, kann auch durch Einbringen eines Schaumstoffkernes erfolgen, wie aus der Figur 3 ersichtlich. In der Figur 3 ist beispielsweise ein Kämpferprofil mit 7 mit T-förmigem Querschnitt dargestellt, wobei das Außenprofil 70 den T-förmigen Querschnitt mit Anschlagvorsprüngen 711 und zwei Hauptkammern die durch den Innensteg T7 abgeteilt sind, aufweist. An der der inneren Sichtseite 710 benachbarten Kammer 702, die hohl verbleibt, wird ein Verstärkungsprofil eingeschoben. Die andere Hauptkammer 701, die der äußeren Sichtseite 730 benachbart ist und die durch weitere Zwischenstege T71 von den Anschlagvorsprüngen abgeteilt ist, ist ein Schaumstoffkern 700 eingesetzt. Dieser Schaumstoffkern 700 ist mit einer expansionsfähigen äußeren Ummantelung EX versehen, beispielsweise einem expansionsfähigen Polyurethanschaum als Haftvermittler. Hierbei kann diskontinuierlich in vorgefertigte Längen des Rahmenprofiles 7 ein mit expansionsfähigem Mittel beschichteter Schaumstoffkern 700 eingeschoben werden und nach dem Einschieben das Expandieren des Mittels EX veranlaßt werden, so daß ein haftfester Sitz und Verbund des Schaumstoffkerns in dem Außenprofil 70 erzeugt wird.

Das erfindungsgemäße Rahmenprofilsystem ermöglicht Fensterrahmen und Türrahmen zu schaffen, die einen sehr geringen Wärmekoeffizienten bis unter 0,7 W/m²K aufweisen. Hierbei ist das Profilsystem flexibel an unterschiedliche Anforderungen der Fenster- und Türgestaltungen anpassbar.

Als schäumfähiges Gemisch wird ein bevorzugt geschlossenzelliger Schaumstoff eingesetzt, insbesondere Hartschaumstoff mit hoher Druckfestigkeit, beispielsweise auf Polyurethanbasis.

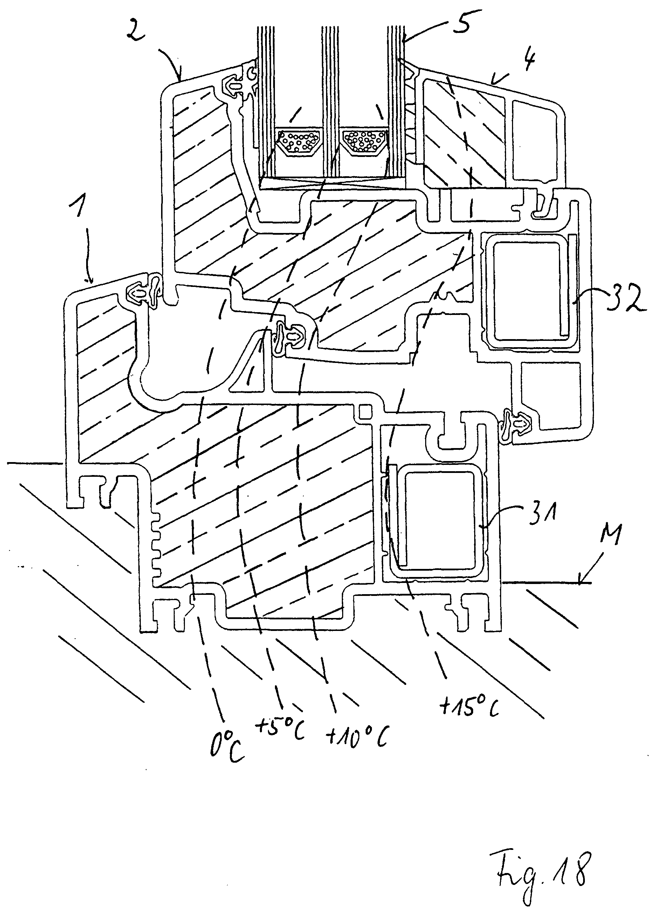

In der Figur 18 ist der mit den erfindungsgemäßen Rahmenprofilen hergestellten Rahmen erzielbare Isothermenverlauf und damit der hohe erzielbare Wärmeschutz schematisiert dargestellt. Der aus den Rahmenprofilen 1 und 2 gebildete Blendrahmen und Profilrahmen eines Fensters ist in das Mauerwerk M eingesetzt. Das Flügelrahmenprofil 2 nimmt die Verglasung 5 auf, die auf der Rauminnenseite mittels der Glasleiste 4 gehaltert ist. Aufgrund der hochwärmegedämmt ausgebildeten Rahmenprofile sowie der in von den wärmedämmenden Bereichen der Rahmenprofile getrennten Kammern untergebrachten Verstärkungsprofile wird es möglich, die für die Bildung von Tauwasser an der Innenscheibe verantwortlichen Isothermen innerhalb der Rahmenkonstruktion enden zu lassen, dies ist die Isotherme + 10° C. Die erfindungsgemäße Rahmenkonstruktion vermeidet die Bildung von Tauwasser im Bereich der Verglasung 5. Die Verstärkungsprofile bilden keinen Kurzschluß und innerhalb der Profilgeometrie der Rahmenprofile ist die Wärmebrückenfreiheit gewährleistet. Die Isothermen, die hier relevant sind, das sind insbesondere die 0,5 und 10° C Isothermen, sie verlaufen innerhalb der Fensterkonstruktion. Sie werden auch nicht durch die Lage des Stahls gelenkt.

Damit wird erfindungsgemäß ein hochwärmegedämmter Rahmen für Fenster mit Verglasungen erreicht.

## Patentansprüche

1. Rahmenprofile zum Herstellen von Rahmen für Fenster oder Türen mit L-, Z- oder T-förmigen Querschnitten, mit einem wärmedämmenden Kern (100, 200, 400, 700) aus überwiegend geschlossenzelligem Hartschaumstoff und zumindest bereichsweiser außenseitiger Ummantelung mittels mindestens eines Außenprofiles (10, 20, 40, 70) aus thermoplastischen kompakten Kunststoff für die Aufnahme einer Verglasung, **dadurch gekennzeichnet, daß** die Rahmenprofile im Querschnitt betrachtet ein von der äußeren Sichtseite (130, 230, 730) zur inneren Sichtseite (110, 210, 710) mittels Innenstegen in mindestens zwei Kammern (101, 102; 201, 202; 701, 702) unterteiltes Außenprqfil (10, 20, 70) aufweisen und eine der Kammern (101, 201, 701) mit dem Hartschaumstoff angefüllt ist und eine nicht mit Hartschaumstoff gefüllte Kammer (102, 202, 702) mit einem Verstärkungsprofil (31, 32, 37) ausgerüstet ist, wobei die mit dem Hartschaumstoff angefüllte Kammer der äußeren Sichtseite (130, 230, 730) des Rahmenprofils benachbart ist und die der Aufnahme des Verstärkungsprofils (31, 32, 37) dienende Kammer der inneren Sichtseite (110, 210, 710) des Rahmenprofiles benachbart ist, so daß die Isothermen ungehindert und wärmebrückenfrei von der Verglasung über die Rahmenprofile in ein an den Rahmen anschließendes Mauerwerk verlaufen.

2. Rahmenprofile nach Anspruch 1, **dadurch gekennzeichnet, daß** die Rahmenprofile ein einteiliges geschlossenes Außenprofil mit Innenstegen (T) aufweisen, durch welche die Kammern abgeteilt sind.

3. Rahmenprofile nach Anspruch 1 oder 2, **dadurch gekennzeichnet, daß** die Rahmenprofile ein einseitig bereichsweise offenes Außenprofil aufweisen.

4. Rahmenprofile nach Anspruch 3, **dadurch gekennzeichnet, daß** der Öffnungsbereich der Rahmenprofile mittels eines an dem Rahmenprofil befestigbaren Deckelprofilbandes (H) verschlossen ist.

5. Rahmenprofile nach Anspruch 3 oder 4, **dadurch gekennzeichnet, daß** das Außenprofil als geschlossenes Hohlprofil extrudiert ist und durch Austrennen eines Bereiches aus dem Außenprofil in Gestalt des Deckelprofilbandes eine Öffnung gefertigt ist und das Deckelprofilband zum Verschließen der Öffnung eingesetzt ist.

6. Rahmenprofile nach einem der Ansprüche 1 bis 5, **dadurch gekennzeichnet, daß** in der die mit Hartschaumstoff angefüllte Kammer begrenzenden Wandung des Außenprofils ein nach außen führendes Loch für das Entweichen von Luft aus der Kammer während des Ausschäumvorganges ausgebildet ist.

7. Rahmenprofile nach einem der Ansprüche 1 bis 6, **dadurch gekennzeichnet, daß** Wasserführungs- und/oder Hinterlüftungsbohrungen (91, 92) ausgebildet sind, die die mit Hartschaumstoff gefüllten Kammern durchsetzen und mittels Kunststoffröhrchen ausgekleidet sind.

8. Rahmenprofile nach einem der Ansprüche 1 bis 7, **dadurch gekennzeichnet, daß** der Hartschaumstoff in die Kammer des Rahmenprofils durch Einschäumen eingebracht ist.

9. Rahmenprofile nach einem der Ansprüche 1 bis 7, **dadurch gekennzeichnet, daß** ein vorgefertigter Kern aus Hartschaumstoff in die Kammer des Rahmenprofiles eingebracht ist, wobei der vorgefertigte Kern aus Hartschaumstoff mit einem expansionsfähigen Mittel beschichtet ist, das eine Verbindung mit dem Außenprofil bewirkt.

10. Rahmenprofile nach einem der Ansprüche 1 bis 9, **dadurch gekennzeichnet, daß** der als Anschlagvorsprung an der Verglasung vorgesehene Vorsprung der Rahmenprofile mit Hartschaumstoff ausgefüllt ist und eine mit einem Hartschaumstoffkern ausgerüstete Glasleiste vorgesehen ist, dergestalt, daß die Verglasung beidseitig von den mit Hartschaumstoff isolierten Anschlagvorsprüngen und Glasleisten mit über die Verbindungsnähte der Verglasung reichenden Einstandshöhe begrenzt ist.

11. Verfahren zum Herstellen von Rahmen für Fenster oder Türen, mit L-, Z- oder T-förmigen Querschnitten, mit einem wärmedämmenden Kern aus überwiegend geschlossenzelligem Hartschaumstoff und zumindest bereichsweiser außenseitiger Ummantelung mittels mindestens eines Außenprofiles aus einem kompakten thermoplastischen Kunststoff, wobei das Außenprofil aus thermoplastischen Kunststoff extrudiert und kalibriert wird und ein schäumfähiges Gemisch auf Basis eines Polyurethans oder eines thermoplastischen Kunststoffes, wie Polystyrol oder Polypropylen, in das Außenprofil eingebracht und unter Ausschäumen des Gemisches ein haftfester Verbund zwischen Außenprofil und Schaumstoffkern erzeugt wird, **dadurch gekennzeichnet, daß** ein mittels Innenstegen in mindestens zwei Kammern unterteiltes Außenprofil extrudiert wird und während des Extrusionsvorganges oder während oder nach dem nachfolgenden Kalibrieren des Außenprofiles ein schäumfähiges Gemisch in nur eine der Kammern des Außenprofiles eingefüllt wird.

12. Verfahren nach Anspruch 11, **dadurch gekennzeichnet, daß** nach dem Extrudieren, Kalibrieren und Erstarren des Außenprofiles das Außenprofil in Längserstreckung an einer Stelle aufgeschnitten und aufgeklappt wird oder an zwei zueinander parallelen Stellen unter Ausbildung eines abhebbaren Deckelprofilbandes aufgetrennt wird und das schäumfähige Gemisch in die geöffnete Kammer des Außenprofiles eingeführt wird und danach das Außenprofil mittels des Deckelprofilbandes wieder verschlossen wird.

13. Verfahren nach Anspruch 11, **dadurch gekennzeichnet, daß** ein Außenprofil extrudiert wird, bei dem die mit schäumfähigem Gemisch anzufüllende Kammer eine in Längserstreckung des Außenprofiles durchgehende Öffnung aufweist und das schäumfähige Gemisch nach der Kalibrierung des Außenprofiles eingefüllt und die Öffnung nachträglich mittels eines Deckelprofilbandes verschlossen wird und das ausschäumende Gemisch einen haftfesten Verbund mit Deckelprofilband und Außenprofil herstellt.

14. Verfahren nach Anspruch 12 oder 13, **dadurch gekennzeichnet, daß** die offene oder geöffnete Kammer des Außenprofiles, vor dem Anfüllen mit schäumfähigem Gemisch getrocknet wird, beispielsweise gefönt wird.

15. Verfahren nach Anspruch 12 oder 13, **dadurch gekennzeichnet, daß** das Deckelprofilband mit dem Außenprofil verrastet wird.

16. Verfahren nach Anspruch 11, **dadurch gekennzeichnet, daß** das Außenprofil mindestens bereichsweise auf den außenseitigen Sichtflächen mit einer witterungsbeständigen Schicht aus thermoplastischem Kunststoff durch Coextrusion versehen wird.

## Claims

1. Frame profiles for producing window or door frames with L-, Z- or T-shaped cross sections, having a heat-insulating core (100, 200, 400, 700) of predominantly closed-cell rigid foam and at least in certain regions an outer casing provided by means of at least one outer profile (10, 20, 40, 70) of compact thermoplastic material for receiving glazing, **characterized in that** the frame profiles viewed in cross section have an outer profile (10, 20, 70) subdivided from the outer face (130, 230, 730) to the inner face (110, 210, 710) into at least two chambers (101, 102; 201, 202; 701, 702) by means of inner cross-pieces, and one of the chambers (101, 201, 701) is filled with the rigid foam and a chamber (102, 202, 702) not filled with rigid foam is provided with a reinforcing profile (31, 32, 37), the chamber filled with the rigid foam being adjacent to the outer face (130, 230, 730) of the frame profile, and the chamber serving for receiving the reinforcing profile (31, 32, 37) being adjacent to the inner face (110, 210, 710) of the frame profile, so that the isothermals run unhindered and without any heat bridges from the glazing via the frame profiles into masonry adjoining the frame.

2. Frame profiles according to claim 1, **characterized in that** the frame profiles have a one-part closed outer profile with inner cross-pieces (T), by which the chambers are divided off.

3. Frame profiles according to either of claims 1 and 2, **characterized in that** the frame profiles have an outer profile which is open in certain regions on one side.

4. Frame profiles according to claim 3, **characterized in that** the opening region of the frame profiles is closed by means of a cover profile strip (H) which can be fastened to the frame profile.

5. Frame profiles according to either of claims 3 and 4, **characterized in that** the outer profile is extruded as a closed hollow profile and an opening is produced by cutting out a region from the outer profile in the shape of the cover profile strip, and the cover profile strip is used for closing the opening.

6. Frame profiles according to any one of claims 1 to 5, **characterized in that** a hole leading to the outside is formed in the wall of the outer profile bordering the chamber filled with rigid foam for the escape of air from the chamber during the foam-filling operation.

7. Frame profiles according to one of Claims 1 to 6, **characterized in that** water-ducting and/or ventilating bores (91, 92) are formed, penetrating the chambers filled with rigid foam and lined by means of plastic tubes.

8. Frame profiles according to any one of claims 1 to 7, **characterized in that** the rigid foam is introduced into the chamber of the frame profile by foam injection.

9. Frame profiles according to any one of claims 1 to 7, **characterized in that** a prefabricated core of rigid foam is introduced into the chamber of the frame profile, the prefabricated core of rigid foam being coated with an expandable agent which brings about a bond with the outer profile.

10. Frame profiles according to any one of claims 1 to 9, **characterized in that** the projection of the frame profiles provided as a stop projection at the glazing is filled with rigid foam, and a glazing bead provided with a rigid foam core is provided in such a way that the glazing is bounded on both sides of the rigid-foam-insulated stop projections and glazing beads by a border height extending beyond the joints of the glazing.

11. A method for producing window or door frames with L, Z- or T-shaped cross sections, having a heat-insulating core of predominantly closed-cell rigid foam and at least in certain regions an outer casing provided by means of at least one outer profile of a compact thermoplastic material, the outer profile being extruded from thermoplastic material and calibrated, and a foamable mixture based on a polyurethane or a thermoplastic material, such as polystyrene or polypropylene, being introduced into the outer profile and an adhesively solid bond produced between the outer profile and the foam core by making the mixture expand, **characterized in that** an outer profile subdivided into at least two chambers by means of inner cross-pieces is extruded and, during the extrusion operation, or during or after the subsequent calibration of the outer profile, a foamable mixture is filled into only one of the chambers of the outer profile.

12. A method according to claim 11, **characterized in that**, after the extrusion, calibration and setting of the outer profile, the outer profile is cut off at one point in the longitudinal extent and bent up, or is severed at two mutually parallel points, forming a cover profile strip which can be lifted away, and the foamable mixture is introduced into the opened chamber of the outer profile, and subsequently the outer profile is closed again by means of the cover profile strip.

13. A method according to claim 11, **characterized in that** an outer profile is extruded, **in that** the chamber to be filled with foamable mixture has an opening which is continuous in the longitudinal extent of the outer profile, and the foamable mixture is filled into the outer profile after calibration of the latter and the opening is subsequently closed by means of a cover profile strip, and the expanding mixture establishes an adhesively solid bond with the cover profile strip and the outer profile.

14. A method according to either of claims 12 and 13, **characterized in that** the open or opened chamber of the outer profile is dried, for example air-blasted, before being filled with foamable mixture.

15. A method according to either of claims 12 and 13, **characterized in that** the cover profile strip is interlocked with the outer profile.

16. A method according to claim 11, **characterized in that** the outer profile is provided at least in certain regions on the outer faces with a weather-resistant layer of thermoplastic material by coextrusion.

## Revendications

1. Profilés de cadre , qui sont destinés à la fabrications de cadres pour des fenêtres ou des portes, lesdits profilés présentant des sections transversales en forme de Z ou de L avec un noyau calorifuge (100, 200, 400, 700) composé principalement d'une mousse expansée dure et au moins dans certaines zones d'une enveloppe extérieure , réalisée au moyen au moins d'un profilé extérieure (10, 20, 40, 70) en matière plastique thermoplastique compacte pour recevoir une vitrification, **caractérisé en ce que** les profilés de cadre présentent une section transversale , quand ils sont vus de l'extérieure (130, 230, 730) vers le côté intérieure (110, 210, 710), un profilé extérieur (10, 20, 70) séparé en deux chambres (101, 102; 201, 202; 701, 702) au moyen de traverses intérieures et **en ce qu'**une des chambres (101, 201, 701) est remplie de la mousse expansée dure et l'autre chambre (102, 202, 702) ,qui n'est pas remplie, est pourvue d'un profilé de renforcement (31, 32, 37), la chambre remplie de la mousse expansée dure étant voisin du côté du profilé de cadre , vu de l'extérieur (130, 230, 730) , et la chambre , qui est destinée à recevoir le profilé de renforcement (31, 32, 37) étant voisin du côté du profilé de cadre , vu de l'intérieure (110, 210, 710) de manière à ce que les isothermes passent librement et sans pont thermique de la vitrification par les profilés de cadre dans les murs qui sont contigus au cadre.

2. Profilés de cadre selon la revendication 1, **caractérisé en ce que** les profilés de cadre présentent un profilé extérieur en une pièce avec des traverses intérieures (T) séparant les chambres.

3. Profilés de cadre selon la revendication 1 ou 2, **caractérisé en ce que** les profilés de cadre présentent un profilé extérieur qui est, dans certaines zones , ouvert d'un côté.

4. Profilés de cadre selon la revendication 3, **caractérisé en ce que** la zone d'ouverture des profilés de cadre est fermée au moyen d'une bande de profilé couvercle (H) susceptible d'être fixée sur le profilé de cadre.

5. Profilés de cadre selon la revendication 1 ou 2, **caractérisé en ce que** le profilé extérieur est extrudé en tant que profilé creux fermé et une ouverture est réalisé en coupant une zone du profilé extérieure en forme de la bande de profilé couvercle et que la bande de profilé couvercle est utilisée pour fermer l'ouverture.

6. Profilés de cadre selon les revendications 1 à 5, **caractérisé en ce qu'**il est formé dans la paroi du profilé extérieur délimitant la chambre remplie d'une mousse expansée dure un trou menant vers l'extérieure qui est destiné à faire sortir l'air de la chambre se produisant au cours du procédé de moussage .

7. Profilés de cadre selon les revendications 1 à 6, **caractérisé en ce** des alésages de guidage d'eau et/ou des alésages d'aération (91, 92) sont formées, qui traversent les chambres remplies de mousse expansée dure et qui sont revêtues au moyen de tubes en matière plastique.

8. Profilés de cadre selon les revendications 1 à 7, **caractérisé en ce que** la mousse expansée dure est introduit dans la chambre du profilé de cadre par moussage.

9. Profilés de cadre selon les revendications 1 à 8, **caractérisé en ce qu'**un noyau préfabriqué en mousse expansée dure est introduit dans la chambre du profilé de cadre, le noyau préfabriqué étant revêtu d'un produit extensible conduisant à une liaison avec le profilé extérieure.

10. Profilés de cadre selon les revendications 1 à 9, **caractérisé en ce que** la saillie des profilés de cadre prévue en tant que saillie de butée sur la vitrification est remplie d'une mousse expansée dure et qu'il est prévue une baguette en verre pourvue d'un noyau en mousse expansée dure , de manière à ce que la vitrification est délimitée des deux côtés par les saillies de butée isolées par de la mousse expansée dure et des baguettes en verre avec une hauteur initiale s'étendant sur les soudures de liaison de la vitrification.

11. Procédé pour la fabrications de cadres pour des fenêtres ou des portes présentant des sections transversales en forme de Z ou de L avec un noyau calorifuge composé principalement d'une mousse expansée dure et est au moins dans certaines zones réalisé d'une enveloppe extérieure au moyen au moins d'un profilé extérieure en matière thermoplastique compacte, le profilé extérieur étant extrudé d'une matière thermoplastique et calibré et un mélange susceptible de pouvoir mousser, sur la base d'un polyuréthane ou d'une matière plastique comme le polystérol ou le polypropylène, est introduit dans le profilé extérieur et, en faisant mousser le mélange, un assemblage adhésif résistant est formé entre le profilé extérieur et le noyau en mousse expansé , **caractérisé en ce qu'**un profilé extérieur, qui est séparé au moyen de traverses intérieures en au moins deux chambres, est extrudé et qu'un mélange susceptible de mousser est introduit pendant l'opération d'extrusion ou pendant ou après le calibrage suivant des profilés extérieurs dans seulement une des chambres du profilé extérieur.

12. Procédé selon la revendication 11, **caractérisé en ce que** le profilé de cadre est découpé à un endroit en direction longitudinale après l'extrusion, le calibrage et la solidification du profilé de cadre et ouvert ou découpé en deux endroits parallèles en formant une bande de profilé couvercle et **en ce que** le mélange susceptible de mousser est introduit dans la chambre ouverte du profilé extérieur et ensuite le profilé extérieur est refermé au moyen de la bande de profilé couvercle.

13. Procédé selon la revendication 11, **caractérisé en ce qu'**un profilé extérieur est extrudé, dans lequel la chambre qui doit être remplie d'un mélange susceptible de mousser présente une ouverture continue en direction longitudinale du profilé de cadre et que le mélange susceptible de mousser est introduit après le calibrage du profilé extérieur et l'ouverture est fermé ultérieurement au moyen d'une bande de profilé couvercle et le mélange moussant forme un assemblage adhésif résistant avec la bande de profilé couvercle et le profilé extérieur.

14. Procédé selon revendication 12 ou 13, **caractérisé en ce que** la chambre ouverte ou étant ouverte du profilé extérieure est séché avant d'être rempli avec le mélange susceptible de mousser, par exemple séché avec de l'air.

15. Procédé selon revendication 12 où 13, **caractérisé en ce que** la bande de profilé couvercle est encliqueté avec le profilé de cadre.

16. Procédé selon la revendication 11, **caractérisé en ce que** le profilé extérieur est pourvu au moins dans certaines zones sur les surfaces visibles du côté extérieur d'un revêtement résistant aux intempéries en matière thermoplastique, réalisé par co-extrusion.
